# EUROPEAN PATENT SPECIFICATION

(11) **EP 2 337 459 B1**
(45) Date of publication and mention of the grant of the patent: **26.09.2012**
(21) Application number: 08876033.5
(22) Date of filing: 29.08.2008
(51) Int. Cl.: A23L 1/212

(54) **PROCESS FOR PRODUCING VEGETABLE OR FRUIT PULP OR PUREE PACKAGING**
VERFAHREN ZUR HERSTELLUNG EINER VERPACKUNG FÜR GEMÜSE- ODER FRUCHTMARK ODER PÜREE
PROCÉDÉ DE PRODUCTION D'UN CONDITIONNEMENT DE PULPE OU PURÉE DE LÉGUMES OU DE FRUITS

(43) Date of publication of application: 29.06.2011
(73) Proprietor: Fructa&Co S.r.l., 33170 Pordenone (IT)
(72) Inventor: DE ROCCO Mr. Alberto, 31018 Gaiarine Treviso (IT); CALZAVARA Mr. Michele, 33170 Pordenone (IT)
(74) Representative: Giugni, Diego
(86) International application number: PCT/IT2008/000563
(87) International publication number: WO 2010/023701

(56) References cited:
- WO-A-2004/112502
- US-A- 5 840 356
- US-A1- 2004 156 960
- US-A1- 2004 191 382

## Description

### Field of the Invention

The present invention refers to a process for producing vegetable or fruit pulp or puree packages and, in particular, a process for producing fruit pulp purée in a package such that the organoleptic properties thereof can be preserved for an extended period of time in a condition as is typical of fresh fruit.

### Technical Background of the Invention

Largely known since many years now in the fruit and vegetable processing industry are processes for producing fruit pulp or purée, which are aimed at enabling the nutritional qualities of the fruit to be preserved in appropriate packages in view of a subsequent use thereof in a variety of food preparations, such as for instance fruit juices, garnishes for ice cream, sweets, desserts, and the like.

Generally, these processes include a number of conventional processing steps for the preparation of either fresh fruit, such as washing, peeling, stoning, or deep-frozen fruit, in which case just a thawing step is generally required. Thereafter, the preliminarily prepared fruit is minced, squashed and/or sieved so as to obtain a mash that is then treated with chemical substances and/or physical (thermal) treatments aimed at eliminating bacteria and/or contaminants. These treatments can be carried out even after the mashed fruit is poured in a purée state into appropriate containers or packages to be then properly sealed to ensure proper preservation of the product.

Usually, fruit-based food products, such as fruit juices, are kept for preservation in plastic bottles that are duly sealed by means of appropriate plastic caps, possibly under the interposition of an aluminium foil used as a means to directly seal the bottles at the mouth thereof. Alternatively, use is made of cardboard, Tetrapak™ or glass containers.

In particular, in the case of fruit purée, use is made of plastic tub-like containers that are sealed with an aluminium foil and preserved for a few days at a storage temperature of +4°C.

Now, the above-described processes, although largely used in the art, actually, are not free from drawbacks.

In the first place, in the case that fresh fruit is used in the process, all above-cited preparation and processing steps must be carried out under such environmental conditions as to ensure hygiene, which is however quite difficult to be obtained, unless complicated and expensive measures are implemented involving not only working rooms and equipment, but also the workers themselves. Likewise, it has been noticed that the use of ready-prepared or deep-frozen fruit does not facilitate the process in any way, actually, singe deep-frozen fruit has quite often turned out as having been contaminated at the origin and, moreover, it must be duly thawed prior to its being able to undergo further processing, with the result that the bacterial charge is activated.

Anyway, the above-cited problems have been solved through the addition of the afore-mentioned chemical/physical treatments to the process.

US 5,840,356 discloses a shelf-stable fruit puree and the method for preparing said puree. To prepare the puree, frozen fruit of at least one type is slowly thawed in a refrigerated environment for a defined period of time, and then immediately combined with a premix of preservatives dissolved in water.

Nonetheless, chemical treatments necessarily require the use of substances that, on the one side, can In any case prove as having a health-affecting effect and, on the other side, are certainly not well-accepted by consumers in general, who are reluctant to purchase and eat or drink foodstuffs containing chemical preservatives.

On the other hand, as far as the largely used thermal treatments are concerned, it has been noticed that heat-treated fruit purée tends to generally acquire a brownish colour along with a taste of stewed fruit, which practically after the organoleptic properties that are typical of fresh fruit. As a result, these purée preparations are not appreciated and accepted by consumers to any particular extent.

In addition, as this has been explained hereinbefore, currently marketed products are packaged in rigid or semirigid containers that do not fit particularly well to the requirements connected with the use of a fruit purée. In fact, pouring a purée out of a container of this kind turns out as being awkward due to the dense nature of the product.

### Summary of the Invention.

The main object of the present invention therefore lies in providing a process for producing a kind of vegetable or fruit pulp or purée packaging, which is effective in ensuring adequate preservation of the organoleptic properties of fresh fruit and vegetables, the convenience of ready-to-use products, the certainty of a hygienically non-objectionable product, and the capability of being preserved even at room temperature without any addition of preservative of a chemical nature being required.

According to the present invention, this aim is reached in a process which includes processing steps and conditions that have been accurately designed and modified with respect to the corresponding steps of conventional processes for producing vegetables or fruit pulp or purée, through the proper selection of a combination of technical devices.

Accordingly, it is a first purpose of the present invention to provide a process for producing a vegetable or fruit pulp or purée packaging as recited in the appended claims.

It is further a second purpose of the present invention to provide a vegetable or fruit pulp or purée packaging that is obtainable in accordance with the above-noted process.

Further features and advantages of the process and the vegetable or fruit pulp or purée packaging of the present invention will become apparent and be more readily understood from the description of an exemplary embodiment that is given below by way of non-limiting example.

### Detailed Description of the Invention

The basic idea, which the present invention is founded on, derives from an analysis triggered by direct observations concerning the use of fruit in ice-cream shops in general. The possibility has therefore been considered for a product to be created, which would show the whole lot of organoleptic properties typical of fresh fruit (i.e. flavour, taste), while at the same time ensuring the practical advantages of deep-frozen fruit pulp.

At first sight, this may appear as being quite banal a task, but it took a lot of research work and related experiments to progressively identify and reach those properties, which have then become peculiar of the ultimately reached result. In particular, merits and deficiencies of both fresh and deep-frozen fruit have been the object of close consideration to thereby highlight following basic facts, i.e. that fresh fruit is not steadily available all year long or, in the case that it is found or provided beyond the period of natural maturation and availability thereof, its price increases to quite appreciable an extent; furthermore, its availability, even in the gathering period thereof, is not always constant in terms of quality; finally it must be stored in air-conditioned rooms for proper preservation. What is more, all this occurs still prior to its being used to its dual purpose; in fact, when it reaches the final processing plant, the fruit itself must be washed and peeled, while removing non-edible parts (stones, cores, processed into purée, and then used.

In this process, however, all steps must be carried out in a proper food-grade environment, as this has been explained hereinbefore.

The results have sometimes been such as to show the existence of even serious problems of micro-biological contamination in the final product.

Another factor that has been duly considered has been the one relating to rejects, as well as to the waste coming exactly from the fruit preparation step of the process.

A same extent of analytical attention has then been devoted to deep-frozen food. In this particular case, there are practically no problems concerning availability and convenience in use. However, a number of other problems have been pinpointed, such as due preservation and storage. In fact, owing to deep-frozen fruit not being generally used up entirely, i.e. in its whole amount, at once, the need arises for proper refrigeration facilities to be used for the remaining fruit to be stored at a temperature of at least 18 °C below zero.

At this point, the possibility has been considered of modifying one or several steps of a conventional process for treating both fresh and deep-frozen fruit.

Bearing such idea firmly in mind, a number of experiments have therefore been carried out in view of testing ideal conditions adapted to enable the desired aims to be reached.

In the course of such experiments, It has surprisingly and unexpectedly been found that, through just a some modifications and the selection of a proper packaging, the possibility is given for a' fruit pulp or purée free from the poorly appealing taste and brownish colour of stewed fruit to be produced, actually.

In the following description, the term "pulp" or "purée" is used to mean a fluid, but thick semi-processed product looking out as a mash of non-stewed substances, as obtained by different liquidizing processes including mashing, puréeing, blending, homogenizing, emulsifying and possible combinations thereof.

The inventive process for producing packaged vegetable or fruit pulp or purée therefore comprises following steps of:
a) providing pieces of fruit or vegetables;
b) treating said pieces of fruit or vegetables so as to obtain a homogeneous semi-processed product in the form of purse;
c) keeping said purée under agitation conditions at a temperature ranging from room temperature to 60°C for a time length ranging from 5 minutes to 40 minutes, at a pH value ranging from 2.6 to 2.9;
d) filling said purée into a flexible bag formed of a sheet material comprising three layers of food-grade plastic film and one layer of aluminum foil sandwiched between said layers of plastic film;
e) creating a vacuum inside said flexible bag so as to reach down to a vacuum value of not less than 0.2 bar;
f) sealing said bag after the vacuum creating step according to e) above;
g) submitting said bag to heat treatment through a sequence of successive steps comprising a first step having a time length of anywhere between 15 and 25 minutes to bring the package up to a temperature of 105 °C in a gradual manner, a second step having a time length of anywhere between 5 and 15 minutes to keep the package at said temperature, a third step having a time length of anywhere between 5 and 15 minutes to gradually cool the package down to a temperature of 4 °C.

Step a) of providing fruit or vegetables occurs in a conventional manner through the supply of either fresh fruit or vegetables from a storage facility or deep-frozen fruit or vegetables in an appropriate deep-freezer.

In the first case, the thus provided pieces of fresh fruit or vegetables start by undergoing accurate sorting, aimed at preventing possible unsuitable pieces (e.g. damaged or spoiled by weather and air agents or transport conditions) from being passed on for use; they are then submitted to washing to have them cleaned externally. Such washing is done by means of water in an appropriate brushing apparatus. As this phase is being carried out, the treated pieces of fruit or vegetables are preferably sampled and tested for a possible presence of antiparasitic agents, pesticides and plant protection products in general. This washing phase is followed by peeling, stalk removal, stone and core removal.

In the case that fresh fruit is being handled, which is subject to rapid oxidation after peering, a pre-treatment with food-grade acidulous solutions, such as for instance citric acid, is preferably added to the process.

In the case that use is made of deep-frozen fruit or vegetables, the sole edible part thereof is of course are provided since the beginning. In other words there are no cores, stones, stalks or peels to be removed. Even in this case however, a sampling procedure is preferably provided for the quality of the fruit or vegetables to be duly certified at the laboratory.

Step b) of treating the thus prepared pieces of fruit or vegetables includes delivering them into a mincing apparatus comprising an altogether conventional cutter that enables them to be reduced into a homogeneous purée having preferably a density situated anywhere between 1.00 and 1.10 g/ml, more preferably between 1.02 and 1.08 g/ml, as calculated according to the DEN001U.AB-standard method.

Step c) of preserving the purée as obtained in the preceding step b) is carried out automatically by transferring the purée from the cutter to specially provided preparation equipment via pump-assisted conduits. Such preparatory equipment comprises containers that are heated through the walls thereof so as to be able to heat the mass of the purée up to a temperature ranging preferably from room temperature to a maximum value of 52 °C. Furthermore, such containers are provided with a fan-like agitator, which, as driven by an appropriate electric motor so as to operate at higher speeds than 900 rpm, preferably than 1000 rpm, is adapted to create a convective vortex.

During this steep, the pH value of the mass being treated is checked and adjusted to a value situated anywhere between 2.6 and 2.9 through the addition of varying quantities of food-grade acid substances, such as for instance citric acid, lactic acid, ascorbic acid, hydrochloric acid, sorbic acid, phosphoric acid, and mixtures thereof, according to the fruit being handled and the actual pH value detected before the addition. Preferably, use is made of citric acid. Usually, the pH , value of the mass is checked by means of a pH-meter equipped with a thermometer so as to also enable the temperature of the mass to be checked at the same time. Preferably, the acid is added in a shower-like manner as the mass keeps being stirred.

It should be specially noticed that - during the same step c) of preserving the purée as described above - fructose is preferably added in a quantity varying from 0 to 30 percent in a continuous, shower-like manner and not in solution.

According to a preferred embodiment of the present invention, also added during this step c) of the process is a substance or a composition, whose task is to lubricate the purée so as to make it particularly slippery, i.e. flowable and, therefore, easily swallowable also by people suffering from dysphagia. Such substances may be selected among the ones that are normally available on the market, such as for instance starch, lipids and gelating agents.

Preferably, this preservation step c) is kept going on for a length of time of anywhere between 15 and 30 minutes.

Step d) of filling the bags includes transferring - again via an automated conveyance system of a conventional kind - the fruit or vegetable purée to the metering and packaging apparatus for the corresponding tasks to be performed. In particular, this apparatus enables amounts of fruit mass to be metered, which span from a minimum of 100 g up to a maximum of 10 kg. Therefore, correspondingly sized bags will be used there, which in all cases feature a composite structure comprising an aluminium foil sandwiched between two or more layers of a food-grade plastic film, such as for instance a film of polyvinylchloride, polyolefins, polyethylene, polypropylene, polyamide, polyester, and combinations thereof. Preferably, such composite structure comprises an aluminium foil sandwiched between three layers of food-grade plastic film. More preferably, such composite structure comprises - in a sequence from the exterior to the interior of the bag - a polyester plastic film, an aluminium foil, a polyamide plastic film, and a polypropylene plastic film, all of which may for instance be coupled to each other by means of laminar adhesives of a conventional kind, among which the two-component polyurethane-based ones are preferred.

A particularly preferred composite structure is the one represented by a sequence - again in the direction from the exterior to the interior of the bag - of a PET plastic film, an aluminum foil, an OPA (oriented polyamide) plastic film, and a CPP (CAST-type polypropylene) plastic film. Moreover, thicknesses may of course vary depending on the desired strength and rigidity properties to be obtained. For example, a structure such as the just described one may comprise a PET film having a thickness of 12 µm, an aluminium foil having a thickness of 7 µm, an OPA film having a thickness of 15 µm, and a CPP film having a thickness of 75 µm. Bags featuring a structure as this one are available on the market under the type denomination of PSU4SN or PSU3TN. according to the bag size, as produced by GOGLIO SpA, or under a material code 406733 VELPMANYOTTCPFBBS.

It should be kept in mind that the above described structure is featuring advantageous chemical and physical properties, since its tensile and barrier properties are such as to enable optimum organoleptic qualities to be preserved, actually. In particular, the tensile strength value in the machine direction and transversally (ASTM D882-97) is 81 N/15 mm when measured both in the machine direction and transversally (ASTM D882-97), the ultimate elongation strength value in the machine direction (ASTM D882-97) is 100 ±20% in the machine direction and 70 ±20% transversally, oxygen permeability (ASTM D3985-95) is <0.1 cc/m²/24hr, and moisture permeability is <0.1 g/m⁹/24hr.

Preferably, during step f) of sealing the bag, also step e) of creating a vacuum inside the bag is carried out, again in an automated manner. After having been filled, the bags move into a vacuum apparatus in a still open condition. Immediately thereupon, the apparatus closes up and the vacuum process starts to be completed through four successive sub-steps, i.e.:
- closing up of the vacuum bell;
- squeezing of the bag by means of pressure pads adapted to cause air to be expelled from the interior of the bag;
- opening of the vacuum electromagnetic valve for vacuum to be created in
   a) a time-controlled manner, by setting the number of seconds required to create vacuum as desired;
   b) a level-controlled manner inside the vacuum chamber there is provided a pressure switch that stops the process as soon as the desired level of vacuum is reached.

Optionally, inert gas may be blown into the bag, via conventional valves and injectors, so as to fill the bag with gas until a pre-set pressure is reached.

In particular, the vacuum coefficient varies depending on the temperature and the weight density of the purée, as well as the volume of the bag. In all cases, however, the vacuum index shall never be set as to be lower than 0.2 bar and preferably it is set anywhere between 0.3 and 0.8 bar. Anyway, adjustments of the vacuum in accordance with the above-mentioned weight-density and volume parameters are well within the abilities of those skilled in the art, who shall therefore be able to set the vacuum apparatus accordingly.

Step f) of sealing the bag may in turn be carried out by means of bars provided with electric heating elements that overheat to thereby cause the composite plastic sheet to fusion bond along the opening thereof. Such bonding of the bag is generally completed in a length of time of 1.5 seconds, after which the bag is perfectly sealed and ready to be dropped onto a conveyor belt provided immediately below the vacuum bell.

Thereupon, the sealed bags are loaded into proper crates and sent to the next step g) for heat-treatment. In particular this heat-treatment step may be carried out by having the sealed bags loaded into autoclaves of a conventional kind for the treatment of foodstuffs. Therefore, such autoclaves may be of the traditional and not continuous-flow type, so that it shall be duty appreciated that the data given in this specification are typical of plants of this kind. In all cases, it shall be duty kept in mind that differences in time length, temperature and treatment pressure values that may occur when converting the inventive process from a noncontinuous-flow to a oontinuous-flow one are well within the abilities of those skilled in the art.

Preferably, the heat-treatment step is comprised of a high-level pasteurization process, i.e. a process wherein the regular pasteurization temperatures, i.e. 65 °C of low-level pasteurization and 85 °C of medium-level pasteurization, are exceeded by far and large in that they reach up to as high

The pasteurization cycle may take a time varying from 25 to 50 minutes and is preferably subdivided into a first temperature rise phase lasting from 15 to 25 minutes, in which temperature is increased to up to 105 °C in a very steep manner, a second temperature holding phase lasting from 5 to 15 minutes, in which the temperature is hold at 105 °C, and a third cool-down phase lasting from 5 to 15 minutes, in which the temperature is pulled abruptly down to 4 °C, as this is typical of a pasteurization cycle. More preferably, the total duration of the heat-treatment step amounts to 40 minutes as subdivided into 20 minutes to bring up the product temperature to 105 °C, 10 minutes at a temperature held at 105 °C, and 10 minutes to cool the product down to 4 °C.

Once the heat-treatment cycle is concluded, the process is terminated by the bags being removed from the autoclaves and conveyed to the packaging station, when the labels carrying all relevant indications as provided for by the law are applied to the bags and the bags themselves are finally put into cartons for delivery to the warehouse.

The kind of packaging obtained in accordance with the inventive process as described above allows vegetable or fruit purée to be preserved even at room temperature for a period of time of up to approx. 12-to-24 months from production date.

In addition, based on laboratory tests carried out on samples of finished product it has been found that the vegetable or fruit purée contained in the above-described bags turns advantageously out as being either substantially free from any bacterial charge that may prove noxious for humans or, anyway, featuring such negligible bacterial charge as to be able to be considered absolutely safe for human consumption at the light of the limits set by all applying standards concerning food.

It has also been found that during all the various steps of the inventive process, the bacterial charge does not undergo any significant variation; quite the opposite, in the case of an accidental, unintentional contamination, the bacterial charge is pulled drastically down to the above-cited level generally considered as being fully safe for human consumption.

In addition, it has surprisingly been noticed that, in the case of fruit purée, the typical brownish colour and stewed-fruit taste have been completely eliminated, so that the product is imparted both the appealing appearance and the flavour of fresh and not stewed fruit.

It should also be borne in mind that the process according to the present invention, owing to the combination of the various processing steps and processing conditions, enables a packaging to be produced in quite simple and low-cost a manner, while doing away with any need for complicated processing steps and sequences to be implemented and chemical substances to be used for treatment to preservation purposes.

Furthermore, the use of a bag-like container of the kind described hereinbefore enables the purée to be processed in quite versatile and safe a manner thanks to the particularly hygienic, robust and malleable structure thereof. In addition, thanks again to its own structure, the bag, once emptied, allows for convenient disposal, thereby avoiding any problem connected to bulk, i.e. space demands or compaction needs as they typically arise in connection with commonly used rigid or semi-rigid containers of all kinds. Quite to the opposite, the bag can be most conveniently flattened out and folded up. As a result, the packaging according to the present invention is advantageous even from a general environment-safeguard point of view.

As noted hereinbefore, the inventive process may also be used for producing vegetable purée, as intended for instance for the preparation of vegetable creams, soups and homogenized food for babies.

Conversely, when fruit is used in the process, it is possible for the resulting purée to be used for garnishing cakes, and ice cream.

A further purpose of the present invention is to provided a semi-finished product in the form of vegetable and/or fruit purée that can be obtained with the process described hereinbefore. In particular, this semi-finished product is a purée of fresh fruit having a thickness, i.e. density situated anywhere between 1.00 and 1.0 g/ml, preferably between 1.02 and 1.08 g/ml, as calculated with the aforecited method, and preferably free from the brownish colour and taste that are typical of stewed fruit. In other words, the fruit purée has an appearance that is substantially the same as the one of the fresh pulp of just gathered fruit, and a flavour that is substantially similar to the one of the fresh pulp of just gathered fruit.

Yet another purpose of the present invention is to provide a package comprising a vegetable, or fruit purée as obtainable in accordance with the afore-explained process.

Fully apparent from the above description is at this point the fact that all drawbacks and disadvantages set forth in the introductory part of this specification with reference to the processes for producing vegetable or fruit purée according to the prior art have been effectively done away with. In addition, considerable advantages have been obtained over the products that are currently available on the market.

In any case, both the inventive process and the related package shall obviously not be understood as being limited to the above-described embodiment, since it is fully apparent to those skilled in the art that various improvements and modifications may be introduced or added without departing from the scope of the present invention as defined in the appended claims.

An exemplary mode, in which the present invention may be carried out and embodied, shall anyway be described below by way of non-limiting example to further explanatory purposes.

### Exemplary Mode of Carrying Out the Inventive Process

200 kg of deep-frozen pieces of apples at a temperature of -18 °C are stored in a refrigerator at a storage temperature of +4 °C in view of allowing them to thaw. Once thawed, the fruit pieces are loaded into an apparatus provided with a first portion equipped with blades for the same fruit pieces to be minced, i.e. cut into very small pieces, and a second portion equipped with a worm screw for conveying the minced fruit to a third portion provided with blades and an extrusion plate featuring appropriate openings for a purée to be obtained. The thus resulting purée drops into double-jacketed steel containers provided with an agitator installed thereinside and driven to rotate at 900 rpm in view of generating a connective vortex of the purée in the container. At the same time, a sample is taken from the purée for checking the pH value thereof. At this point, via a shower-like cock, citric acid is possibly added to a quantity of 1.75 kg in view of bringing pH from an initial value of typically approx. 3.9 down to a value situated within the range from 2.6 to 2.9. Moreover, the temperature of the purée is checked and controlled so as to keep it at a value of approx. 50 °C through a circulation of a heated fluid inside the interspace formed between the two container jackets. Then, via appropriate conduits provided with flow-control pumps, the purée is delivered into the hoppers of a metering apparatus operating with pistons and variable cylinder. In this apparatus, the bags are conveyed sidelong on a saddle-shaped conveyor in a state in which they are joined to each other in series by a strip of the sheet material, which they are made of. These bags are of the PSU4SN 1kg type marketed by GOGLIO S.p.A., and they are carried to be positioned below the nozzles of said metering apparatus for filling. The conveyor keeps then moving on to carry the filled bags into a sealing/vacuum station. In this station, following steps are carried out in a sequence:
- closing up of the vacuum bell;
- squeezing of the bag by means of pressure pads, or the like, so as to expel the air contained therein;
- opening of the electromagnetic vacuum valve for vacuum to be created in
   a) a time-controlled manner, for a time length of less than one second, and
   b) a level-controlled manner; wherein a pressure switch is provided inside the vacuum chamber to stop the process as soon as a vacuum coefficient of 0.2 bar is reached.
At this point, the bags are sealed by means of bars provided with electric heating elements that overheat to a temperature of approx. 95-to-100 °C, thereby causing the plastic sheet to fusion-bond all along the opening of the bag. Such fusion bonding of the bag is completed in a time length of 1.5 seconds. Finally, the process is terminated with the vacuum belt opening up so as to enable the sealed bags to drop into crates or carts being carried by a conveyor belt into and through an autoclave for the pasteurization treatment. Once such autoclave doses up, the pasteurization cycle starts to go through following phases:
- a first temperature rise phase lasting 20 minutes, in which temperature is increased to up to 105 °C in a very steep manner, a second temperature holding phase lasting 10 minutes, in which the temperature is held at 105 °C, and a third cool-down phase lasting 40 minutes, in which the temperature is pulled abruptly down to 4 °C.
At the end of this pasteurization cycle, the autoclave is opened and the carts carrying the bags are brought into a cleaning apparatus for the bags to be washed externally with water and then dried. Once property dried, the bags are carried into a labelling apparatus, were the labels carrying all necessary indications as provided for by both the law and the applying standards are applied thereonto.

## Claims

1. Process for producing vegetable or fruit pulp or puree containing packaging, comprising the steps of:
a) providing pieces of fruit or vegetables;
b) treating said pieces of fruit or vegetables so as to obtain a homogeneous semi-processed product in the form of a purée;
c) keeping said purée under agitation conditions at a temperature ranging from room temperature to 60°C for a time length ranging from 5 minutes to 40 minutes, at a pH value ranging from 2.6 to 2.9;
d) filling said purée into a flexible bag formed of a sheet material comprising three layers of food-grade plastic firm and one layer of aluminium foil sandwiched between said layers of plastic film;
e) creating a vacuum inside said flexible bag so as to reach down to a vacuum value of not less than 0.2 bar,
f) sealing said bag immediately after the vacuum creating step according to e) above;
g) submitting said bag to heat treatment through a sequence of successive sub-steps comprising a first sub-step having a time length of anywhere between 15 and 25 minutes to rapidly bring the package up to a temperature of 105 °C, a second sub-step having a time length of anywhere between 5 and 15 minutes to hold the package at said temperature, a third sub-step having a time length of anywhere between 5 and 15 minutes to rapidly cool the package down to a temperature of 4 °C.

2. Process according to claim 1, wherein step a) includes sorting out the fresh fruit or vegetables so as to pick up the appropriate pieces and reject possible unsuitable ones, such as pieces damaged or spoiled by weather and air agents or transport conditions, washing the thus selected pieces to have them cleaned externally, peeling, stalk removal, stone and core removal, or the use of already prepared deep-frozen fruit or vegetables provided in the form of the sole edible part thereof.

3. Process according to claim 2, wherein step a) includes a pre-treatment with food-grade acidulous solutions in the case that fresh fruit is being handled, which is subject to rapid oxidation after peeling, to the purpose of slowing down oxidation.

4. Process according to any of the claims 1 to 3, wherein step b) of treating the thus prepared pieces of fruit or vegetables from the preceding step a) includes reducing said pieces of fruit or vegetables into a state of homogeneous purée having preferably a density situated anywhere between 1.00 and 1.10 g/ml, more preferably between 1.02 and 1.08 g/ml, as calculated according to the DEN001 U.AB-standard method.

5. Process according to any of the claims 1 to 4, wherein step c) of preserving the purée as obtained in the preceding step b) is carried out automatically by transferring the purée into wall-heated containers that are provided with a fan-like agitator, which, as driven by an appropriate electric motor so as to operate at higher speeds than 900 rpm, is adapted to create a convective vortex.

6. Process according to any of the claims 1 to 5, wherein, during step c), the pH value of the mass being treated is checked and adjusted to a value situated anywhere between 2.6 and 2.9 through the addition, in a shower-like manner as the purée keeps being stirred, of acid substances selected from citric acid, lactic acid, ascorbic acid, hydrochloric acid, sorbic acid, phosphoric acid, and mixtures thereof.

7. Process according to any of the claims 1 to 6, wherein, during step c) of preserving the purée, fructose is in a quantity varying from 0 to 30 percent in a continuous, shower-like manner.

8. Process according to any of the claims 1 to 7, wherein also added during step c) is a substance or a composition selected from starch, lipids and gelating agents, aimed at lubricating the purée.

9. Process according to any of the claims 1 to 8, wherein said bag is comprised of layers of food-grade plastic film selected from polyvinylchloride, polyolefins, polyethylene, polypropylene, polyamide, polyester, and combinations thereof.

10. Process according to claim 9. wherein said structure of the bag comprises, in a sequence from the exterior to the interior of the bag, a polyester plastic film, an aluminium foll, a polyamide plastic film, and a polypropylene plastic film, all of which are firmly coupled to each other.

11. Process according to claim 10, wherein said composite structure is represented by the sequence of a PET plastic film, an aluminium foil, an OPA (oriented polyamide) plastic film, and a CPP (CAST-type polypropylene) plastic film.

12. Process according to any of the claim 1 to 11, wherein said bag has a tensile strength value of 81 N/15 mm when measured both in the machine direction and transversally (ASTM D882-97), a ultimate elongation strength value (ASTM D882-97) of 100 ±20% in the machine direction and 70 ±20% transversally, an oxygen permeability (ASTM D3985-95) of <0.1 cc/m²/24hr, and a moisture permeability of <0.1 g/m²/24hr.

13. Process according to any of the claims 1 to 12, wherein step e) of creating a vacuum comprises following sub-steps:
- shutting up the bag in a vacuum belt;
- squeezing of the bag by means of pressure pads adapted to cause air to be expelled from the Interior of the bag;
- opening of the electromagnetic vacuum valve for vacuum to be created in
i) a time-controlled manner, by setting the number of seconds required to create vacuum as desired, and/or
ii) a level-controlled manner, wherein inside the vacuum chamber there is provided a pressure switch that stops the process as soon as the desired level of vacuum is reached.

14. Process according to any of the claims 1 to 13, wherein during step e) inert gas is blown into the bag so as to fill the bag with gas until a pre-set pressure is reached.

15. Packaging comprising a fresh fruit or vegetable purée free of chemical preservatives obtainable in accordance with the process according to any of the claims 1 to 14.

16. Packaging according to claim 15, comprising a purée free of chemical preservatives, having a density ranging from 1.00 to 1.10 g/ml and sealed in a bag featuring a tensile strength value of 81 N/15 mm when measured both in the machine direction and transversally (ASTM D882-97), a ultimate elongation strength value (ASTM D882-97) of 100 ±20% in the machine direction and 70 ±20% transversally, an oxygen permeability (ASTM D3985-95) of <0.1 cc/m²/24hr, and a moisture permeability of <0.1 g/m²/24hr.

## Patentansprüche

1. Verfahren zum Herstellen einer Verpackung für Gemüse- oder Fruchtmark oder Püree, umfassend folgende Schritte:
h) Bereitstellen von Frucht- oder Gemüsestücken;
i) Behandeln der Frucht- oder Gemüsestücke derart, dass man ein homogenes halb verarbeitetes Produkt in Gestalt eines Pürees erhält;
j) Beibehalten des Pürees in Bewegungszuständen bei einer Temperatur, die im Bereich zwischen Raumtemperatur und 60° liegt, für eine Zeitdauer, die zwischen 5 Minuten und 40 Minuten liegt, bei einem pH-Wert zwischen 2,6 und 2,9;
k) Füllen des Pürees in einen flexiblen Beutel, der aus einem Blattmaterial besteht, das drei Schichten einer lebensmittelechten Kunststofffolie und eine Schicht einer Aluminiumfolie enthält, die zwischen den Schichten der Kunststofffolie sandwichartig angeordnet ist;
I) Erzeugen eines Unterdrucks in dem flexiblen Beutel bis zu einem Unterdruck von nicht weniger als 0,2 Bar;
m) Verschließen des Beutels unmittelbar nach dem Unterdruck-Erzeugungsschritt gemäß e) oben; und
n) Aussetzen des Beutels einer Wärmebehandlung durch eine Abfolge aufeinander folgender Teilschritte, umfassend einen ersten Teilschritt, der eine Zeitlänge zwischen 15 und 25 Minuten hat, um die Verpackung schnell auf eine Temperatur von 105° C zu bringen, einen zweiten Teilschritt, der eine Zeitlänge zwischen 5 und 15 Minuten hat, um die Verpackung auf dieser Temperatur zu halten, und einen dritten Teilschritt, der eine Zeitlänge zwischen 5 und 15 Minuten hat, um die Packung schnell auf eine Temperatur von 4° C zu bringen.

2. Verfahren nach Anspruch 1, bei dem Schritt a) umfasst: das Aussortieren der frischen Früchte oder des frischen Gemüses, um so die geeigneten Stücke zu wählen und mögliche ungeeignete Stücke, wie etwa jene, die durch Wetter und Lufteinflüsse oder Transportbedingungen beschädigt oder zerstört wurden, zu verwerfen, Waschen, der auf diese Weise gewählten Stücke, um sie außen zu reinigen, Schälen, Entstielen, Entfernen von Stein oder Kern oder die Verwendung bereits vorbereiteter, tiefgefrorener Früchte oder bereits vorbereiteten, tiefgefrorenen Gemüses, bereitgestellt in Gestalt lediglich des essbaren Teils derselben.

3. Verfahren nach Anspruch 2, bei dem Schritt a) eine Vorbehandlung mit lebensmittelechten, säuerlichen Lösungen für den Fall umfasst, dass frische Früchte verarbeitet werden, die einer schnellen Oxidation nach dem Schälen ausgesetzt sind, um die Oxidation zu verzögern.

4. Verfahren nach einem der Ansprüche 1 bis 3, bei dem Schritt b) des Aufbereitens der in dieser Weise vorbereiteten Frucht- oder Gemüsestücke von dem vorangehenden Schritt a) das Reduzieren der Frucht- oder Gemüsestücke in einen Zustand eines homogenen Pürees umfasst, das vorzugsweise eine Dichte hat, die zwischen 1,00 und 1,10 g/ml und vorzugsweise zwischen 1,02 und 1,08 g/ml liegt, wie sie mit dem Verfahren gemäß DEN001U.AB-Standard berechnet wird.

5. Verfahren nach einem der Ansprüche 1 bis 4, bei dem Schritt c) des Beibehaltens des Pürees, wie man es bei dem vorangehenden Schritt b) erhält, automatisch durch Überführen des Pürees in wandbeheizte Behälter ausgeführt wird, die mit einem gebläseähnlichen Rührwerk ausgestattet sind, das, wenn es mit einem geeigneten Elektromotor angetrieben wird, um so bei höheren Drehzahlen als 900 U/min zu arbeiten, dazu eingerichtet ist, einen konvektiven Wirbel zu erzeugen.

6. Verfahren nach einem der Ansprüche 1 bis 5, bei dem während Schritt c) der pH-Wert der behandelten Masse auf einen Wert geprüft und eingestellt wird, der sich zwischen 2,6 und 2,9 befindet, in dem brausenartig, während das Püree gerührt wird, saure Substanzen hinzugefügt werden, die aus Zitronensäure, Milchsäure, Askorbinsäure, Salzsäure, Sorbinsäure, Phosphorsäure und Mischungen derselben gewählt sind.

7. Verfahren nach einem der Ansprüche 1 bis 6, bei dem während Schritt c) des Beibehaltens des Pürees Fruktose in einer Menge zwischen 0 bis 30 Prozent kontinuierlich, brausenartig zugesetzt wird.

8. Verfahren nach einem der Ansprüche 1 bis 7, bei dem ebenfalls bei Schritt c) eine Substanz oder eine Zusammensetzung hinzugefügt wird, die aus Stärke, Lipiden und Geliermitteln gewählt ist, um das Püree geschmeidiger zu machen.

9. Verfahren nach einem der Ansprüche 1 bis 8, bei dem der Beutel aus Schichten einer lebensmittelechten Kunststofffolie besteht, die aus Polyvinylchlorid, Polyolefinen, Polyethylen, Polypropylen, Polyamid, Polyester und Kombinationen derselben gewählt ist.

10. Verfahren nach Anspruch 9, bei dem das Gefüge des Beutels in einer Abfolge vom Äußeren zum Inneren des Beutels umfasst: eine Polyester-Kunststofffolie, eine Aluminiumfolie, eine Polyamid-Kunststofffolie und eine Polypropylen-Kunststofffolie, die allesamt fest miteinander verbunden sind.

11. Verfahren nach Anspruch 10, bei dem das zusammengesetzte Gefüge durch die Abfolge einer PET-Kunststofffolie, einer Aluminiumfolie, einer OPA-Kunststofffolie (OPA - gestrecktes Polyamid) und einer CPP-Kunststofffolie (CPP - gegossenes Polypropylen) dargestellt ist.

12. Verfahren nach einem der Ansprüche 1 bis 11, bei dem der Beutel einen Zugfestigkeitswert von 81 N/15 mm, gemessen sowohl in Maschinenlaufrichtung als auch quer dazu (ASTM D882-97), einen ultimativen Dehnungsfestigkeitswert (ASTM D882-97) von 100 ± 20% in Maschinenlaufrichtung und 70 ± 20% quer dazu, eine Sauerstoffdurchlässigkeit (ASTM D3985-95) von <0,1 cm³/m²/24h und eine Feuchtedurchlässigkeit von <0,1 g/m²/24h hat.

13. Verfahren nach einem der Ansprüche 1 bis 12, bei dem der Schritt e) des Erzeugens eines Unterdruckes folgende Teilschritte umfasst:
d) Verschließen des Beutels in einer Unterdruckglocke;
e) Drücken des Beutels mit Hilfe von Druckkissen, die dazu eingerichtet sind, zu bewirken, dass die Luft aus dem Inneren des Beutels gedrückt wird;
f) Öffnen des elektromagnetischen Unterdruckventils zum Erzeugen eines Unterdrucks in:
i) einer zeitgesteuerten Art und Weise durch Einstellen der Anzahl von Sekunden, die erforderlich sind, um einen gewünschten Unterdruck zu erzeugen, und/oder
ii) in einer pegelgesteuerten Art und Weise, wobei im Inneren der Unterdruckkammer ein Druckschalter vorgesehen ist, der den Vorgang stoppt, sobald der gewünschte Pegel des Unterdrucks erreicht ist.

14. Verfahren nach einem der Ansprüche 1 bis 13, bei dem während des Schrittes e) Inertgas in den Beutel geblasen wird, um so den Beutel mit Gas zu füllen, bis ein voreingestellter Druck erreicht ist.

15. Verpackung, enthaltend ein Püree aus frischen Früchten oder frischem Gemüse, das frei von chemischen Konservierungsstoffen ist, die man gemäß dem Verfahren nach einem der Ansprüche 1 bis 14 erhält.

16. Verpackung nach Anspruch 15, enthaltend ein Püree, das frei von chemischen Konservierungsstoffen ist und eine Dichte im Bereich von 1,00 bis 1,10 g/ml hat und in einem Beutel eingeschlossen ist, der einen Zugfestigkeitswert von 81 N/15mm sowohl in der Maschinenrichtung als auch quer dazu gemessen (ASTM D882-97), einen ultimativen Dehnungsfestigkeitswert (ASTM D882-97) von 100 ± 20% in der Maschinenrichtung und 70 ± 20% quer dazu sowie eine Sauerstoffdurchlässigkeit (ASTM D3985-95) von <0,1 cm³/m²/24h und eine Feuchtedurchlässigkeit von <0,1 g/m²/24h aufweist.

## Revendications

1. Procédé de production d'emballage contenant de la pulpe ou de la purée de légumes ou de fruits, comprenant les étapes de :
a) fournir des morceaux de fruits ou de légumes ;
b) traiter lesdits morceaux de fruits ou de légumes de sorte à obtenir un produit semi-transformé homogène sous la forme d'une purée ;
c) garder ladite purée dans des conditions d'agitation à une température s'étendant de la température ambiante à 60°C pendant une durée s'étendant de 5 minutes à 40 minutes, à une valeur de pH s'étendant de 2,6 à 2,9 ;
d) charger ladite purée dans un sac flexible formé d'un matériau en feuille comprenant trois couches de film plastique alimentaire et une couche de feuille en aluminium prise en sandwich entre lesdites couches de film plastique ;
e) créer un vide à l'intérieur dudit sac flexible de sorte à descendre jusqu'à une valeur de vide d'au moins 0,2 bar ;
f) sceller ledit sac immédiatement après l'étape de création de vide selon l'étape e) ci-dessus ;
g) soumettre ledit sac à un traitement thermique à travers une séquence de sous-étapes successives comprenant une première sous-étape ayant une durée comprise entre 15 et 25 minutes pour amener rapidement l'emballage jusqu'à une température de 150°C, une deuxième sous-étape ayant une durée comprise entre 5 et 15 minutes pour maintenir l'emballage à ladite température, une troisième sous-étape ayant une durée comprise entre 5 et 15 minutes pour refroidir rapidement l'emballage jusqu'à une température de 4°C.

2. Procédé selon la revendication 1, selon lequel l'étape a) inclut un tri des fruits ou légumes frais de sorte à choisir les morceaux appropriés et à rejeter d'éventuels morceaux inappropriés, tels que des morceaux abîmés ou gâtés par des agents atmosphériques ou aériens ou par les conditions de transport, un lavage des morceaux ainsi sélectionnés pour qu'ils soient propres extérieurement, un pelage, un retrait de tige, un retrait de trognon et de noyau, ou une utilisation de fruits ou de légumes surgelés déjà préparés fournis sous la forme de leur seule partie comestible,

3. Procédé selon la revendication 2, selon lequel l'étape a) inclut un prétraitement par des solutions acidulées alimentaires dans le cas où on manipule du fruit frais, lequel est sujet à une oxydation rapide après pelage, dans le but de ralentir l'oxydation.

4. Procédé selon l'une quelconque des revendications 1 à 3, selon lequel l'étape b) de traitement des morceaux de fruits ou de légumes ainsi préparés par l'étape a) précédente inclut une réduction desdits morceaux de fruits ou de légumes en un état de purée homogène ayant préférentiellement une densité située quelque part entre 1,00 et 1,10 g/ml, plus préférentiellement entre 1,02 et 1,08 g/ml, comme calculé selon la méthode de la norme DEN001U.AB.

5. Procédé selon l'une quelconque des revendications 1 à 4, selon lequel l'étape c) de confisage de la purée obtenue dans l'étape b) précédente est réalisée automatiquement par un transfert de la purée dans des récipients à parois chauffées qui sont équipés d'un agitateur de type ventilateur, qui, lorsqu'entraîné par un moteur électrique approprié de sorte à fonctionner à des vitesses supérieures à 900 tours par minutes, est adapté pour créer un tourbillon convectif.

6. Procédé selon l'une quelconque des revendications 1 à 5, selon lequel, pendant l'étape c), la valeur de pH de la masse en train d'être traitée est vérifiée et ajustée à une valeur située quelque part entre 2,6 et 2,9 grâce à l'ajout, à la manière d'une douche pendant que la purée continue à être remuée, de substances acides sélectionnées parmi l'acide citrique, l'acide lactique, l'acide ascorbique, l'acide chlorhydrique, l'acide sorbique, l'acide phosphorique, et leurs mélanges.

7. Procédé selon l'une quelconque des revendications 1 à 6, selon lequel, pendant l'étape c) de confisage de la purée, du fructose est ajouté dans une quantité s'étendant de 0 à 30 pourcents d'une manière continue, de type douche.

8. Procédé selon l'une quelconque des revendications 1 à 7, selon lequel on ajoute aussi pendant l'étape c) une substance ou une composition sélectionnée parmi l'amidon, des lipides, des agents gélifiant, ayant pour but de lubrifier la purée.

9. Procédé selon l'une quelconque des revendications 1 à 8, selon lequel ledit sac est composé de couches de film plastique alimentaire sélectionné parmi le polychlorure de vinyle, des polyoléfines, le polyéthylène, le polypropylène, le polyamide, le polyester, et leurs combinaisons.

10. Procédé selon la revendication 9, selon lequel ladite structure du sac comprend, dans l'ordre à partir de l'extérieur vers l'intérieur du sac, un film plastique en polyester, une feuille d'aluminium, un film plastique en polyamide, et un film plastique en polypropylène, tous étant fermement couplés les uns aux autres.

11. Procédé selon la revendication 10, selon lequel ladite structure composite est représentée par la séquence d'un film plastique en PET, une feuille d'aluminium, un film plastique en OPA (polyamide orienté), et un film plastique en CPP (polypropylène de type CAST).

12. Procédé selon l'une quelconque des revendications 1 à 11, selon lequel ledit sac a une valeur de résistance à la traction de 81 N/15 mm lorsque mesuré à la fois dans la direction de la machine et transversalement (ASTM D882-97), une valeur de résistance à l'élongation à la rupture (ASTM D882-97) de 100 ± 20 % dans la direction de la machine et de 70 ± 20 % transversalement, une perméabilité à l'oxygène (ASTM D3985-95) de <0,1 cm³/m²/24h, et une perméabilité à l'humidité de <0,1 g/m²/24h.

13. Procédé selon l'une quelconque des revendications 1 à 12, selon lequel l'étape e) de création d'un vide comprend les sous-étapes suivantes :
d) enfermement du sac dans une cloche à vide ;
e) pressage du sac au moyen de coussins de pression adaptés pour expulser l'air de l'intérieur du sac ;
f) ouverture de la vanne à vide électromagnétique pour créer un vide
i) d'une manière commandée dans le temps, en réglant le nombre de secondes nécessaires pour créer un vide tel que désiré, et/ou
ii) d'une manière commandée par niveau, selon laquelle à l'intérieur de la chambre à vide est fourni un interrupteur à pression qui arrête le processus dès que le niveau de vide désiré est atteint.

14. Procédé selon l'une quelconque des revendications 1 à 13, selon lequel pendant l'étape e) un gaz inerte est soufflé dans le sac de sorte à remplir le sac avec un gaz jusqu'à atteindre une pression pré-réglée.

15. Emballage comprenant une purée de fruit ou de légume frais sans conservateurs chimiques pouvant être obtenu conformément au procédé selon l'une quelconque des revendications 1 à 14.

16. Emballage selon la revendication 15, comprenant une purée sans conservateurs chimiques, ayant une densité s'étendant de 1,00 à 1,10 g/ml et scellée dans un sac présentant une valeur de résistance à la traction de 81 N/15 mm lorsque mesurée à la fois dans la direction de la machine et transversalement (ASTM D882-97), une valeur de résistance à l'élongation à la rupture (ASTM D882-97) de 100 ± 20 % dans la direction de la machine et 70 ± 20 % transversalement, une perméabilité à l'oxygène (ASTM D3985-95) de <0,1 cm³/m²/24h, et une perméabilité à l'humidité de <0,1 g/m²/24h.
